# EUROPEAN PATENT SPECIFICATION

(11) **EP 4 410 909 B1**
(45) Date of publication and mention of the grant of the patent: **17.09.2025**
(21) Application number: 23154091.5
(22) Date of filing: 31.01.2023
(51) Int. Cl.: C09D 11/322, C09D 11/38, C09D 11/326, C09D 11/40, C09D 11/54

(54) **WHITE INKJET INK COMPOSITION**
WEISSE TINTENSTRAHLTINTENZUSAMMENSETZUNG
COMPOSITION D'ENCRE BLANCHE POUR JET D'ENCRE

(43) Date of publication of application: 07.08.2024
(73) Proprietor: AGFA NV, 2640 Mortsel (BE)
(72) Inventor: LINGIER, Sophie, 2640 Mortsel (BE); LENAERTS, Jens, 2640 Mortsel (BE); WYNANTS, Sonny, 2640 Mortsel (BE)
(74) Representative: Lingier, Stefaan Frans L.

(56) References cited:
- EP-A1- 1 241 139
- EP-A1- 1 609 825
- EP-A1- 3 981 846
- US-A1- 2005 282 928
- US-A1- 2021 155 816

## Description

### Technical Field

The present invention relates to an aqueous white inkjet ink comprising a white metal oxide pigment suitable for printing white images on non-absorbing substrates and absorbing substrates. The invention includes also a recording method by means of ink-jetting using said ink composition.

### Background Art

The use of ink-jet printing systems has grown substantially in recent years. This growth may be attributed to important improvements in print resolution and overall print quality coupled with appreciable reduction in cost.

Today's ink-jet printers offer acceptable print quality for many commercial, business, and household applications at lower costs than comparable products available just a few years ago. Notwithstanding their recent success, research and development efforts continue toward improving ink-jet print quality over a wide variety of different applications, but there remain challenges.

One challenge is inkjet printing white ink formulations made with metal oxide particles such as titanium dioxide pigments, the inks having a low viscosity and the particles having large average particle sizes. These properties may lead to an increased sedimentation rate, where the ink formulation separates from the pigment and the pigment settles to form a compact sediment.

The compact sediment may be difficult to re-disperse, which can lead to clogging of the print head nozzles, pigment depletion, and/or pigment enrichment. Pigment enrichment occurs when the pigment concentration is not evenly distributed in the ink, and has a higher concentration at or near the nozzle. Typical failures include formation of solid pigment plugs inside or on top of print head nozzles caused by ink drying (also known as decap or crusting), which leads to print start-up issues.

More specifically, decap problems can arise when jetting inks showing bad re-dispersibility. As used herein, the terms "re-dispersible" and "redispersibility" mean that after the white inkjet ink has been exposed to a period of storage e.g. during transport or in the printing equipment, brief mixing, re-circulation, or shaking substantially uniformly disperses the pigment solids (including those that may have settled) throughout the ink vehicle again.

WO22015323 discloses a white inkjet textile ink including a non-self-dispersed white pigment and an anionic copolymer dispersant having a weight average molecular weight (Mw) from 125.000 g/mol to about 30.000.000 g/mol. The amount of anionic copolymer dispersant should be preferably equal to 1 wt.% or less with respect to the weight of the white ink composition.

US2017/0362456 discloses white pigment dispersions suitable for inkjet printing, including a white metal oxide pigment dispersed by two co-dispersants, both i) a short-chain anionic dispersant having a weight average molecular weight ranging from 1000 Mw to 30.000 Mw, and ii) a non-ionic or predominantly non-ionic dispersant. However, the stability of the white pigment dispersion is still insufficient to be used in an industrial production environment of aqueous white inkjet inks.

Moreover, the use of polymeric dispersants in combination with metal oxide particles as in both above mentioned patent applications, has the disadvantage that once sedimentation occurred in a white ink composition, re-dispersibility is almost not possible. Avoiding sedimentation is then the only way to achieve jetting reliability but requires adapted ink tank and special ink supply channel design in printing equipment.

US2018/194959A discloses an aqueous white ink, comprising white metal oxide pigments having an average particle size from 5 nm to less than 100 nm and a polymeric dispersant associated with a surface of the white metal oxide pigment together with core-shell latex particles. It is known that inks having latex particles are vulnerable to latex film formation at the air / ink phase and lead to nozzle clogging resulting in bad ink jetting reliability and decap behaviour. Additionally, US2005282928 might be cited as prior art.

There is still a need for a dispersant which keeps metal oxide white pigments in a dispersed state in industrial scale white inkjet ink formulations such that these can be easily re-dispersed without the need of high shear equipment and which lead to excellent decap behaviour.

### Summary of invention

It is an objective of the invention to provide a solution for the above stated problems. The objective has been achieved by using a phosphate, polyphosphate or phosphite salt in a white inkjet ink composition to disperse the white metal oxide pigment as defined in Claim 1.

According to another aspect, the present invention includes an aqueous inkjet ink set as defined in Claim 8.

According to another aspect, the present invention includes a recording method using the ink composition according to claim 1 as defined in Claim 10.

Other features, elements, steps, characteristics and advantages of the present invention will become more apparent from the following detailed description of preferred embodiments of the present invention. Specific embodiments of the invention are also defined in the dependent claims.

### Description of embodiments

### A. Aqueous white inkjet ink

The aqueous white ink according to the invention comprises a white metal oxide pigment, preferably having an average particle size from 100 nm to 1000 nm, in an amount from 5 to 50 wt.%, a salt selected from the group consisting of a phosphate, polyphosphate and phosphite and a water-miscible organic solvent. The ink has a viscosity from 1 to 25 mm²/s at 32 °C.

### A.1. Phosphate, polyphosphate or phosphite salt.

The salt selected from the group consisting of a phosphate, polyphosphate and phosphite present in the ink according to the invention acts as a dispersant for the white metal oxide pigments, which is thought to adhere to the white metal oxide piment surface.

A phosphate salt comprises a salt (having the formula M₃PO₄ with M an alkali or ammonium ion) or organic ester, both derived from phosphoric acid. It most commonly means orthophosphate, a derivative of orthophosphoric acid H₃PO₄.

A phosphite salt comprises a salt (having the formula M₂HPO₃ with M an alkali or ammonium ion) or an ester having the formula PHO(OR)₂, both derivatives of phosphorous acid, H₃PO₃,

Polyphosphates are salts or esters of polymeric oxyanions formed from tetrahedral PO₄ (phosphate) structural units linked together by sharing oxygen atoms. Polyphosphates can adopt linear or a cyclic ring structures.

Suitable polyphosphates are tetrasodium pyrophosphate, tetrapotassium pyrophosphate, sodium tripolyphosphate, potassium tripolyphosphate, polymetaphosphate [for example, (NaPO₃)ₓ, such as sodium hexametaphosphate where x = 6 or other similar structures with x being higher than 6.

Commercial available polyphosphates are EXA (sodium hexametaphosphate) a 2% solution from Calgon PT, PRAYPHOS S5PP FG being a sodium pentaphosphate (CASRN18859-55-7), PRAYPHOS SHMP 458 TG being a sodium hexamethaphosphate CASRN10124-56-8), PRAYPHOS STMP 118 FG being is a sodium trimethaphosphate (CASRN7785-84-4), PRAYPHOS KTPP FG being a potassium tripolyphosphate (CASRN13845-36-8) all supplied by PRAYON-RUPEL NV.

Preferably, the salt selected from the group consisting of a phosphate, polyphosphate and phosphite is in the acid form, as an alkali metal salt or as an ammonium salt. In order to achieve a white metal oxide pigment dispersion which is stable during storage and which can be easily added to the ink vehicle to form an inkjet ink in a production environment, the salt selected from the group consisting of a phosphate, polyphosphate and phosphite is added during the preparation of the dispersion.

The amount of the salt selected from the group consisting of a phosphate, polyphosphate and phosphite is preferably from 0.01 to 10 wt.%, more preferably from 0.01 to 1 wt.% with respect to the total weight of the ink. Amounts below this range result in an insufficient activity of the salt as a dispersant leading to insufficient stability of the white metal oxide pigments in the dispersion or in the ink composition.

### A.2. White metal oxide pigment

Examples of suitable white metal oxide pigments as the colorant in the white ink according to the invention, include titanium dioxide (TiO₂), zinc oxide (ZnO) and zirconium dioxide (ZrO₂). In a preferred embodiment of the invention, the white pigment is titanium dioxide. In a more preferred embodiment of the invention, the titanium dioxide is in its rutile form.

In another embodiment of the invention, the white metal oxide pigment may include white metal oxide pigment particles coated with silicon dioxide (SiO₂). In yet another embodiment of the invention, the white metal oxide pigment content to silicon dioxide content can be from 100:3.5 to 5:1 by weight. In other embodiments of the invention, the white pigment may include white metal oxide pigment particles coated with silicon dioxide (SiO₂) and aluminium oxide (Al₂O₃). In a more preferred embodiment of the invention, the white pigment may be metal oxide particles treated with organic compounds such as polyols or metal oxide particles treated with organic compounds and coated with silicon dioxide.

White metal oxide pigments suitable as pigments in the aqueous white inkjet ink according to the invention do show a zeta potential which is dependent from the pH. Particularly useful white metal oxide pigments are the one which show a zeta potential at a pH of 8, which is lower then - 5 mV, more preferably lower than -10 mV most preferably lower than -20 mV. Without being bound by a theory it is thought that a negatively charged surface of the metal oxide improves the adhesion of the phosphate, polyphosphate or phosphite group, leading to an increased dispersing effect of the white metal oxide pigment.

Suitable examples of white metal oxide pigments are Tronox CR-834 (a white pigment powder containing 97% TiO2 from TRONOX PIGMENTS BV.

Other suitable examples are TI-PURE R960 (TiO₂ pigment powder with 5.5 wt% silica and 3.3 wt% alumina (based on pigment content)); TI-PURE TS-6300 (TIO₂ pigment powder with 9 wt% silica and 5.8 wt% alumina (based on pigment content)); TI-PURE R931 (TiO2 pigment powder with 10.2 wt.% silica and 6.4 wt.% alumina (based on pigment content)); TI-PURE R706 (TiO2 pigment powder with 3.0 wt.% silica and 2.5 wt.% alumina (based on pigment content)), TS-6200 (white pigment powder containing 93% TiO2, 3.6 % Alumina and 3.3 % Silica ), TS-4657 (white pigment powder containing 93% TiO2, 2.2 % Alumina and 3.1 % Silica) all available from Chemours.

The white metal oxide pigment may have high light scattering capabilities, and the average particle size of the white pigment may be selected to enhance light scattering and lower transmittance, thus increasing opacity. The average particle size of the non-self-dispersed white pigment may range from 10 nm to 2000 nm, more preferably from 100 nm to 1000 nm, most preferably from 150 nm to 500 nm. White metal oxide pigments having an average particle size below the mentioned ranges suffer from insufficient opacity leading to a too low color density of the printed images. White metal oxide pigments having an average particle size above the mentioned ranges may lead to jetting reliability problems because of blocked nozzles of the inkjet head.

The method for dispersing the white metal oxide pigments comprises the step of mixing a vehicle, preferably water, and the salt selected from the group consisting of a phosphate, polyphosphate and phosphite to obtain a pre-dispersion.

Subsequently, high shear forces or milling is applied onto the obtained pre-dispersion such as to obtain a stable dispersion of the white metal oxide pigments.

The dispersion method for obtaining the stable dispersion of the white metal oxide pigments, can be arbitrarily selected as long as this is a method for breaking agglomerates of particles and evenly dispersing the pigments in the vehicle.

Equipment suitable for dispersing the white metal oxide pigments include a pressure kneader, an open kneader, a planetary mixer, a dissolver, and a Dalton Universal Mixer. Other suitable milling and dispersion equipment include a ball mill, a pearl mill, a colloid mill, a high-speed disperser, double rollers, a bead mill, a paint conditioner, and triple rollers. The dispersion may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is preferably performed with cooling to prevent build-up of heat.

The particle size of the white metal oxide pigments can be controlled by the treatment time of the high shear application or of the milling. More particularly, by increasing the treatment time, the particles can be made smaller and the amount of particle oversizers can be reduced.

The amount of the white metal oxide pigment in the dispersion may range from 10 wt.% to 70 wt.%, more preferably 20 to 65 wt.% based on the total weight of the dispersion. The white pigment dispersion may then be incorporated into the ink vehicle so that the white metal oxide pigment is present in an active amount that is suitable for the images to be obtained by inkjet printing.

In a preferred embodiment, the white pigment dispersion is incorporated into the ink vehicle so that the white metal oxide pigment is present in an amount ranging from 1 wt.% to 50 wt.% active, more preferably 3 wt.% to 50 wt.%, most preferably 5 to 50 wt.% based on a total weight of the white inkjet ink.

### A.3. Vehicle

The vehicle of the aqueous white inkjet ink according to the invention comprises water and a water-miscible organic solvent.

The amount of the vehicle in the inkjet ink and the ratio of the water and water-miscible organic solvent have an impact on the viscosity of the ink.

The aqueous white ink according to the invention has a kinematic viscosity preferably from 1 to 25 mm²/s, more preferably from 3 to 20 mm²/s at a measuring temperature of 32°C. A kinematic viscosity of the ink composition exceeding 25 mm²/s when employed in an ink jet recording method is incapable of achieving stable discharge of a liquid droplet of the ink composition.

The kinetamic viscosity is evaluated using a HERZOG HVM472 instrument (https://www.paclp.com/lab-instruments/brand/herzog/product/23/hvm-472-multirange-viscometer) at a temperature of 32°C.

Suitable water-miscible organic solvents for the aqueous white inkjet ink of the invention may include glycerin, diglycerin, polyglycerin, ethylene glycol, diethylene glycol, triethylene glycol, polyethylene glycol, propylene glycol, 1,3-propanediol, dipropylene glycol, tripropylene glycol, polypropylene glycol, 2-pyrrolidone, N-methylpyrrolidone, dimethyl sulfoxide, and sulfolane.

From the water-miscible organic solvents, it is preferable to use glycerin, diethylene glycol, triethylene glycol, propylene glycol, polyethylene glycol (average molecular weight of 200 to 600), dipropylene glycol, and tripropylene glycol, and more preferably glycerin, diethylene glycol, and propylene glycol, from the viewpoint of moisturizing properties.

Other examples include propylene glycol, dipropylene glycol, 1,3-propanediol, 1,2-butanediol, 1,3-butanediol, 1,4-butanediol, 2,3-butanediol, 3-methyl-1, 3-butanediol, 1,2-pentanediol, 1,5-pentanediol, 2-methyl-2, 4-pentanediol, 3-methyl-1, 5-pentanediol, 1,2-hexanediol, 1,6-hexanediol, ethanol, butanol, propanol and pentanol.

Examples of the glycol ether include monoalkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol monopropyl ether can be preferably exemplified. Other useful examples which are listed in the Swiss list A and hence compatible with food packaging are: Propylene Glycol Monomethyl Ether; Propylene Glycol Monoethyl Ether; Propylene Glycol Monopropyl Ether; Ethylene Glycol Monobutyl Ether; Propylene Glycol Monobutyl Ether; Diethylene Glycol Monoethyl Ether; Diethylene Glycol Monobutyl Ether; Dipropylene Glycol Mono n-Propyl Ether; Dipropylene Glycol Methyl Ether; Tripropylene Glycol Monomethyl Ether. These solvents may be used alone or in combination of two or more.

These water-miscible organic solvents preferably are contained in an amount of 1 to 50 wt.%, more preferably 30 to 45 wt.%, and particularly preferably 30 to 40 wt.%, with respect to the total mass of the ink, from the viewpoint of the viscosity adjustment of the ink and the prevention of clogging of nozzles of the inkjet print head by the moisturizing effect.

### A.4. Surfactant

To adjust the surface tension of the ink, a surfactant can be used, and examples thereof include anionic surfactants, amphoteric surfactants, cationic surfactants, and non-ionic surfactants.

Examples of the anionic surfactant include alkyl sulfocarboxylate, α-olefin sulfonate, polyoxyethylene alkyl ether acetate, N-acylamino acid and salt thereof, N-acylmethyl taurine salt, alkyl sulfate polyoxy alkyl ether sulfate, alkyl sulfate polyoxyethylene alkyl ether phosphate, rosin acid soap, sulfate esters of castor oil, lauryl alcohol sulfate ester, alkyl phenol type phosphate ester, alkyl-type phosphate ester, alkyl aryl sulfonate, diethyl sulfosuccinate, diethyl hexyl sulfosuccinate, and dioctyl sulfosuccinate.

Examples of the amphoteric surfactant include lauryl dimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, and other imidazoline derivatives thereof.

Examples of the cationic surfactant include 2-vinylpyridine derivatives and poly 4-vinylpyridine derivatives. Further examples of cationic surfactants are quaternary ammonium salts of long chain aliphatic tertiary amines such as cetyl trimethyl ammonium bromide, cetyl dimethyl benzyl ammonium chloride and hydroxyethyl dimethyl dodecyl ammonium chloride and quaternary salts of nitrogen containing heteroaromatic rings such as hexadecyl pyridinium bromide and quaternized imidazoles and benzimidazoles. Other examples are protonated long chain aliphatic amines such as the hydrochloric acid salt of dimethyl hexadaceyl amine and the toluene sulfonic acid salt of diethyl dodecyl amine.

Examples of the nonionic surfactant include ether based surfactants such as polyoxyethylene nonylphenyl ether, polyoxyethylene octyl phenyl ether, polyoxyethylene dodecyl phenyl ether, polyoxyethylene oleyl ether, polyoxyethylene lauryl ether, polyoxyethylene alkyl ether, polyether siloxanes; ester-based surfactants such as polyoxyethylene oleic acid ester, polyoxyethylene distearate, sorbitan laurate, sorbitan monostearate, sorbitan monooleate, sorbitan sesquioleate, polyoxyethylene monooleate, and polyoxyethylene stearate; and acetylene glycol (alcohol)-based surfactants such as 2, 4, 7, 9-tetramethyl-5-decine-4, 7-diol, alkylene oxide adducts of 2,4,7,9-tetramethyl-5-decine-4, 7-diol, 2,4-dimethyl-5-decin-4-ol, and alkylene oxide adducts of 2,4-dimethyl-5-decin-4-ol. These are available, for example, from Air Products (GB) or from Nissin Chemical Industry, e.g Olfine (registered trademark) such as Olfine E1010, 104 series and Surfynol (registered trademark) E series, such as Surfynol 465, Surfynol 104 and Surfynol 61.

### A.5. Resin

The aqueous white ink jet ink composition according to the invention may further comprise a resin. The resin is often added to the ink jet ink formulation to further achieve a good adhesion of the pigment to the substrate or to increase water and solvent resistance of the printed images. The resin is preferably a polymer and suitable resins can be acrylic based resins, a urethane resin, a urethane-modified polyester resin, a carbodiimid containing polymer or a wax.

Suitable polyurethane resins may be selected from the group consisting of aliphatic polyurethane dispersions, aromatic polyurethane dispersions, anionic polyurethane dispersions, non-ionic polyurethane dispersions, aliphatic polyester polyurethane dispersions, aliphatic polycarbonate polyurethane dispersions, aliphatic acrylic modified polyurethane dispersions, aromatic polyester polyurethane dispersions, aromatic polycarbonate polyurethane dispersions, aromatic acrylic modified polyurethane dispersions, for example, or a combination of two or more of the above.

A preferred urethane resin to be used as dispersion in the ink of the invention is a polyester resin including a structural unit containing a urethane bond. Among such resins, a water-soluble or water-dispersible urethane-modified polyester resin is preferred. It is preferable that the urethane-modified polyester resin include at least one structural unit derived from a hydroxyl group-containing polyester resin (polyester polyol) and at least one structural unit derived from an organic polyisocyanate.

Furthermore, the hydroxyl group-containing polyester resin is a resin formed by an esterification reaction or transesterification reaction between at least one polybasic acid component and at least one polyhydric alcohol component.

Some examples of suitable polyurethane dispersions are NEOREZ R-989, NEOREZ R-2005, and NEOREZ R-4000 (DSM NeoResins); BAYHYDROL UH 2606, BAYHYDROL UH XP 2719, BAYHYDROL UH XP 2648, and BAYHYDROL UA XP 2631 (Bayer Material Science); DAOTAN VTW 1262/35WA, DAOTAN VTW 1265/36WA, DAOTAN VTW 1267/36WA, DAOTAN VTW 6421/42WA, DAOTAN VTW 6462/36WA (Cytec Engineered Materials Inc., Anaheim CA); and SANCURE 2715, SANCURE 20041, SANCURE 2725 (Lubrizol Corporation), for example, or a combination of two or more of the above.

Acrylic based resins include polymers of acrylic monomers, polymers of methacrylic monomers, and copolymers of the aforementioned monomers with other monomers. These resins are present as a suspension of particles (latex) having an average diameter of about 30 nm to about 300 nm. The acrylic latex polymer is formed from acrylic monomers or methacrylic monomer residues. Examples of monomers of the acrylic latex polymer include, by way of illustration, acrylic monomers, such as, for example, acrylate esters, acrylamides, and acrylic acids, and methacrylic monomers, such as, for example, methacrylate esters, methacrylamides, and methacrylic acids. The acrylic latex polymer may be a homopolymer or copolymer of an acrylic monomer and another monomer such as, for example, a vinyl aromatic monomer including, but not limited to, styrene, styrene butadiene, p-chloromethylstyrene, divinyl benzene, vinyl naphthalene and divinylnaphthalene.

Some examples of suitable acrylic latex polymer suspensions are, JONCRYL 537 and JONCRYL 538 (BASF Corporation, Port ArthurTX); CARBOSET GA-2111, CARBOSET CR-728, CARBOSET CR-785, CARBOSET CR-761, CARBOSET CR-763, CARBOSET CR-765, CARBOSET CR-715, and CARBOSET GA-4028 (Lubrizol Corporation, Rancho Santa Margarita CA); NEOCRYL A-1110, NEOCRYL A-1131, NEOCRYL A-2091, NEOCRYL A-1127, NEOCRYL XK-96, and NEOCRYL XK-14 (DSM NeoResins, Sluisweg, The Netherlands); and BAYHYDROL AH XP 2754, BAYHYDROL AH XP 2741, BAYHYDROL A 2427, and BAYHYDROL A2651 (Bayer Material Science, Baytown TX), for example, or a combination of two or more of the above.

Besides resin and latices, polymeric capsules can be advantageously incorporated in the ink comprising the pigment dispersion of the invention. Useful polymeric capsules are the microcapsules disclosed in JP 2003-313476 and the nanocapsules disclosed in EP313198A. Preferably nanocapsules can be used which comprise a core having reactive chemistry which may be thermally reactive chemistry activatable directly by heat or indirectly using an optothermal converting agent. These nanocapsules are described in [0059-0067] of EP313198A. In the latter, for example an infrared absorbing dye converts the infrared light of an infrared laser or infrared LEDs into heat.

Suitable waxes are petroleum waxes, vegetable waxes, and animal waxes. Examples of the petroleum wax include a paraffin wax, a microcrystalline wax, and a petrolatuin. Examples of the vegetable wax include carnauba wax, candelilla wax, rice wax, and Japan tallow. Examples of the animal wax include lanolin and bees wax. Examples of the synthetic wax include a synthetic hydrocarbon wax and a modified wax. Examples of the synthetic hydrocarbon wax include a polyethylene wax, a Fischer-Tropsch wax, and examples of the modified wax include a paraffin wax derivative, a montan wax derivative, a microcrystalline wax derivative, and a fatty acid amide wax derivative, polyethylene wax, polypropylene wax and polytetrafluoroethylene wax. In an example, the wax is selected from the group consisting of polypropylene waxes, high density polyethylene (HDPE) waxes, and combinations thereof.

The concentration of the resin in the ink jet ink according to the invention is at least 0.4 (wt.)% and preferably lower than 30 (wt.)%, more preferably lower than 20 (wt.)%. Amounts above this range result in unreliable jetting behaviour of the ink, amounts below this range result in insufficient binding capability of the pigments resulting in insufficient adhesion or water resistance of the images.

### B. Inkjet recording method

In a preferred inkjet recording method according to the invention, the method comprises the steps of:
a) jetting an aqueous white inkjet ink on a substrate, the ink comprising a white metal oxide pigment having an average particle size from 100 nm to 1000 nm, in an amount from 5 to 50 wt.%, a salt selected from the group consisting of a phosphate, polyphosphate and phosphite, a water soluble organic solvent, the ink having a viscosity from 1 to 25 mm²/s at 32°C; and
b) drying the jetted inkjet ink by applying heat or an air flow.

Before the jetting of the inkjet ink according to the invention, an aqueous pre-treatment liquid or primer can be applied onto the substrate. The aqueous pre-treatment liquid comprises preferably a component capable of aggregating components of the aqueous inkjet ink of the invention. Examples of such components are flocculants selected from the group consisting of multivalent salts, cationic surfactants and cationic resins.

In another preferred inkjet recording method, the method comprises the steps of: a) applying an aqueous pre-treatment liquid on a substrate, the pre-treatment liquid comprising a component capable of aggregating components of the aqueous inkjet ink of the invention. b) optionally at least partially dry the applied aqueous pre-treatment liquid ; and c) jetting the aqueous white ink comprising a white metal oxide pigment having an average particle size from 100 nm to 1000 nm, in an amount from 5 to 50 wt.%, a salt selected from the group consisting of a phosphate, polyphosphate and phosphite, a water soluble organic solvent, the ink has a viscosity from1 to 25 mm²/s at 32°C..; and d) drying the jetted inkjet ink. The component capable of aggregating components of the aqueous inkjet ink of the invention is preferably a multivalent metal salt, a cationic polymer or an organic acid.

The substrate in the inkjet recording method may be porous, such as e.g. textile, paper and leather, but preferably a low-absorbing substrate such as card board substrates or non-absorbing substrates such as polyethylene, polypropylene, polycarbonate, polyvinyl chloride, polyesters like polyethylene terephthalate (PET), polyethylene naphthalate (PEN), polylactide (PLA), polymethylmethacrylate or polyimide.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The substrates may be transparent, translucent or opaque.

In another preferred inkjet recording method, the pre-treatment liquid is applied via a technique selected from the group of ink jetting, valve jetting and spraying. More specifically, these techniques of ink jetting and valve jetting allow, the pre-treatment liquid according to the invention to be applied image wise, preferably onto the surfaces whereupon the inkjet ink will be printed to obtain an image. These last means of applying the pre-treatment liquid has the advantage that the amount of required pre-treatment liquid is substantially lower than with other application methods of priming the substrate.

Examples of the heating process to dry the pre-treatment liquid or the inkjet ink according to the invention include, but are not limited to, heat press, atmospheric steaming, high-pressure steaming, THERMOFIX. Any heat source can be used for the heating process; for example, an infrared ray source is employed.

The drying step can be performed at the air, but the heating step must be performed by using heat sources; examples include equipment for forced-air heating, radiation heating such as IR-radiation, including NIR-, CIR- and SWIR radiation, conduction heating, high-frequency drying, and microwave drying. The drying step is such that a temperature of the printed images is preferably obtained below 150°C.

A preferred ink jet head for the inkjet printing system to jet the inkjet ink according to the invention is a piezoelectric ink jet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with ink or liquid. When the voltage is again removed, the ceramic expands to its original shape, ejecting a drop of ink from the ink jet head. However, the jetting of the aqueous inkjet ink or aqueous pre-treatment liquid comprising the particle dispersion according to the present invention is not restricted to piezoelectric inkjet printing. Other inkjet print heads can be used and include various types, such as a continuous type, a thermal print head type, a MEM-jet type head and a valve jet type.

Specifically, for reliable jetting of metal oxide based white inks, the inkjet printing system includes preferably shaking, mixing or stirring equipment. This equipment is to re-disperse the white inkjet ink which may have settled in between print jobs. In some examples, the printing system may be configured to shake the cartridge, ink tank or ink buffer tank including the white inkjet ink. In other examples, the print cartridge or ink tank be configured to mix or stir the white inkjet prior to printing. In still other examples, the printing system may be configured to recirculate the white inkjet ink prior to printing.

A particularly useful inkjet head to print white inkjet inks is from the type that includes a recirculation of the ink within the head such as through-flow heads as disclosed in WO 2006/030235 A2 and WO 2006/064036 A1. This type of inkjet head is very suitable to be incorporated in a printing system comprising i) a through-flow print head having one or more nozzles for ejecting a drop of white ink onto a substrate to be printed, ii) a fluid circulation system for feeding and circulating the ink through the print head, comprising an ink tank for containing the ink, iii) a supply buffer tank for receiving the ink from the main tank and supplying the ink to the through-flow print head, iv) a return manifold for receiving the from the through-flow print head and returning fluid to the main ink tank via a pump.

### C. Examples

### C.1. Materials

All materials used in the following examples were readily available from standard sources such as Sigma-Aldrich (Belgium) and Acros (Belgium) unless otherwise specified. The water used was demineralised water.
• Tronox CR-834 is a white pigment particle containing 97% TiO2 from TRONOX PIGMENTS BV
• TS-6200 is a white pigment particle containing 93% TiO2, 3.6 % Alumina and 3.3 % Silica
• TIOXIDE XRFDO is alumina-polyol surface treated rutile TiO2 pigment manufactured by VENATOR
• TS4657 is a white TiO2 pigment supplied by Chemours
• Proxelk - D3798 is a 5% solution of CASRN127553-58-6 manufactured by PROM CHEM UK
• Sokalan PA25 CI PN is a short-chain polymeric anionic dispersant from BASF
• Edaplan ^{™} 482 is a polymeric dispersant from MUNZING
• Joncryl 8078 is a 32 wt.% aqueous solution of poly[acrylate-c-styrene] from S C JOHNSON POLYMER BV
• EXA is an aqueous solution of 2 wt.% of sodium hexametaphosphate supplied by Calgon PT.
• PRAYPHOS S5PP FG is a sodium pentaphosphate (CASRN18859-55-7), supplied by PRAYON-RUPEL NV
• PRAYPHOS SHMP 458 TG is a sodium hexamethaphosphate (CASRN10124-56-8), supplied by PRAYON-RUPEL NV
• PRAYPHOS STMP 118 FG is a sodium trimethaphosphate (CASRN7785-84-4), supplied by PRAYON-RUPEL NV
• PRAYPHOS KTPP FG is a potassium tripolyphosphate with CASRN13845-36-8 and was supplied by PRAYON-RUPEL NV
• Surf-1 is a 75 wt.% solution of 2,4,7,9-tetramethyl-5-Decyne-4,7-diol in ethylene glycol from Air Products
• Surf-2 is Surfynol 104PG50, a 50 wt.% solution of 2,4,7,9-tetramethyl-5-Decyne-4,7-diol in propylene glycol from Evonik
• HD is 1,2-hexanediol
• PG is propylene glycol
• Aquacer 530 is a 32 wt.% aqueous emulsion of oxidized HDPE from

### BYK CHEMIE GMBH

- Hostaphat KL 340D is a Mono-, di- and tri-(alkyltetraglycol ether)-pophosphoric acid esters produced by Clariant
- Rhodoline 3700 is polyarylphenyl ether phosphate dispersant manufactured by Solvay

### C.2. Measuring methods

### C.2.1. Average Particle size of white metal oxide pigments in dispersion

The average particle size of the white metal oxide pigment particles was measured using a Zetasizer^{™} Nano-S (Malvern Instruments, Goffin Meyvis) based upon the principle of dynamic light scattering. For reliable ink jetting characteristics (jetting quality and print quality), the average particle size of the dispersed particles is preferably below 300 nm.

### C.2.2. Viscosity of the dispersion

The viscosity of the white metal oxide particle dispersion was evaluated with an Anton Paar MCR302 Rheometer in a cone plate set-up. The viscosity is measured at a shear rate of 10 s⁻¹ at a temperature of 25°C.

As a first evaluation of the storage stability of the white metal oxide particle dispersion, the viscosity increase is measured after ageing the dispersion for 1 week in an oven at 60°C.

### C.2.3. Stability of the white metal oxide pigment dispersion

To evaluate the storage stability of the dispersions, the average particle size of the ink was firstly measured with dynamic light scattering using a Zetasizer^{™} Nano-S (Malvern Instruments, Goffin Meyvis). Samples were measured fresh as well as after ageing 1 week in an oven at 60°C. The relative change in average particle size (PS) was calculated as follows: [(PS(1 week 60°C)- PS(fresh))/ PS(fresh)] and scored according to Table 1.

**Table 1: Scoring of relative change in average particle size (PS)**

| Relative change of PS (%) | Score |
|---|---|
| PS<10 | A |
| 10≤PS<20 | B |
| 20≤PS<30 | C |
| 30≤PS<40 | D |

### C.2.4. Zeta potential of the with metal oxide pigments

The zeta potential of pigment particles was measured with an electroacoustic spectrometer DT310 from 3P instruments with titration unit.

To measure the zeta potential, a suspension was prepared by adding 25 g of pigment to 225 g of deionized water in a vessel of 500 mL. The vessel was loaded with 160 g steatite 5mm beads and was placed on a roller bench for 24 h. Hereafter, 200 g of the suspension was poured into a glass beaker of 250mL and was stirred magnetically. The zeta-potential probe and pH probe were placed in the suspension and the pH was measured. Depending on the pH of the suspension, base (NaOH 1M) or acid (HCI 1N) was added to get to a pH-value ≥8.5 or ≤3.5.

The titration probe is then filled with base (NaOH 1M) or acid (HCI 1N) to do an automatic stepwise titration towards the other end of the pH range.

### C.2.5. Caking

The aqueous white ink samples are said to be caking if the difference in bulk composition of the ink samples is more than 5 % upon storage for 14 days. To measure this, the samples were freshly measured with turbiscan in transmission and backscattering @ 880 nm then left, standing still to allow sedimentation to occur, in the same measurement cell at room temperature for 14 days. After that time, the samples were manually shaken (to reproduce how a costumer would homogenize its sample) for about 10 s and measured again.

Then the "mean" (in backscattering in the middle cell) was compared between the fresh and aged sample. If the difference is < 5%, the sediment is re-dispersed in the solution; if it is > 5%, the sediment is not re-dispersed and there is caking at the bottom of the cell.

### C.2.6. Storage stability of white inks

Stability of the ink is evaluated by putting a sample tube (closed at the top) filled for 80% with ink in an oven at 60 °C. The viscosity and particle size distribution of the ink is evaluated after 1 and 2 weeks of storage at this temperature. To be practically suited, the viscosity of an aqueous inkjet ink should not deviate more than 20% from the original value. The (kinematic) viscosity is evaluated using a HERZOG HVM472 instrument (https://www.paclp.com/lab-instruments/brand/herzog/product/23/hvm-472-multirange-viscometer) at a temperature of 32°C.

The particle size is analysed using a Malver zetasizer (measurement under a 90° angle)

### C.2.7. Latency (Decap time)

The latency test was performed on a Ricoh Gen5S print head using a jetting temperature of 32°C and a fire frequency of 20 kHz. Evaluations were performed after 5 - 10 - 20 min of head idle time as follows.

A first control image was printed on microporous paper with the Image Expert media motion print system at 20 kHz and the number of failing nozzles and side shooting nozzles was determined in that image. After that, a predefined time of 5 min without printing, spitting or jetting was respected, called head idle time. The control image was then reprinted on microporous paper with the IX media motion print system at 20 kHz and the number of failing nozzles and side shooting nozzles in that image was visually determined. This was repeated for head idle times of 10 and 20 minutes. Finally, the sum was made of all failing nozzles and side shooting nozzles in the image for each ink.

### C.3. Preparation of white pigment dispersions

All quantities in this section are given in wt.% with respect to the total weight of the dispersion.

### C.3.1. Preparation of comparative white pigment dispersions with 2 dispersants DISP-C1 to DISP-C4.

Deionized water, a polymeric dispersant (Edaplan 482), a short-chain anionic dispersant (Sokalan PA25 CI PN), 0.4 wt.% Proxelk and 50 wt.% Tronox CR-834 were added in a 100 mL plastic vessel. The vessel was loaded with 160 g of 3 mm yttrium stabilized zirconia beads and the pH was adjusted to 8.0 with a NaOH solution. The amount of the short-chain anionic dispersant is varied and 4 white metal oxide dispersions are obtained. The results of the particle size and viscosity are summarized in Table 2.

**Table 2: Composition and properties of comparative white metal oxide dispersions**

| Dispersion | Wt.% Edaplan 482 | Wt. % Sokalan PA25 CI PN | Average particle size fresh (nm) | Viscosity fresh (mPa.s) | Stability of the dispersion |
|---|---|---|---|---|---|
| DISP-C1 | 5 | 1 | GEL | GEL | GEL |
| DISP-C2 | 5 | 5 | 226 | 46 | C |
| DISP-C3 | 5 | 0.5 | 214 | 115 | C |
| DISP-C4 | 5 | 0.5 | 241 | 58 | C |

From Table 2, it can be observed that different ratios of a short chain anionic dispersant in combination with a polymeric dispersant do not result in stable white metal oxide pigment dispersions. Industrial applicability of these dispersions is hence not possible.

### C.3.2. Preparation of a comparative white metal oxide pigment dispersion with a poly-styrene-acrylate based dispersant DISP-C5.

44,6 wt.% of deionized water, 5 wt.% of Joncryl 8078 and 0.4 wt.% of the biocide (Proxelk - D3798) were premixed in a vessel using a mechanical stirrer. In a next step, 50 wt.% of Tronox CR-834 was sprinkled in the premix and the obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 10 min residence time, the mill was emptied by pumping the obtained dispersion in a vessel.

The white DISP-C5 contains particles with an average particle size of 190 nm and a viscosity of 183 mPa.s. the dispersion showed to be shear thinning.

### C.3.3. Preparation of a white dispersion with a polymeric dispersant DISP-C6 (comparative example).

39.6 wt.% of deionized water, 10 wt.% of Edaplan 482 and 0.4 wt.% of the biocide (Proxelk - D3798) were premixed in a vessel using a mechanical stirrer. In a next step, 50 wt.% of TS-6200 was sprinkled in the premix and the obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 10 min residence time, the mill was emptied by pumping the obtained dispersion in a vessel.

The DISP-C6 dispersion contains particles with an average particle size of 281 nm and a viscosity of 62 mPa.s. The dispersion showed to be slightly shear thinning.

### C.3.4. Preparation of white metal oxide pigment dispersions with a phosphate, polyphospate or phosphite salt as dispersant.

44.6 wt.% of deionized water, dispersant and 0.4 wt.% of biocide (Proxelk - D3798) were premixed in a vessel using a mechanical stirrer in an amount as listed in Table 3. In a next step, TS6200, in an amount according to Table 3, was sprinkled in the premix and the obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 8 m/s. After 25 min residence time, the mill was emptied by pumping the obtained dispersion in a vessel.

**Table 3: Composition and properties of white metal oxide dispersions**

| Dispersion | Dispersant | Amount of dispersant (wt.%) | Amount of TS6200 (wt. %) | Av. Particle size (nm) | Viscosity (mPa.s) |
|---|---|---|---|---|---|
| DISP-I1 | EXA | 0.5 | 50 | 269 | 2.9 (N) |
| DISP-I2 | EXA | 0.75 | 50 | 195 | 6.6 (N) |
| DISP-I3 | PRAYPHOS S5PP FG | 0.75 | 50 | 213 | 6.3 (S) |
| DISP-I4 | PRAYPHOS KTPP FG | 0.75 | 50 | 203 | 4.3 (N) |
| DISP-I5 | PRAYPHOS SHMP 458 TG | 0.65 | 65 | 243 | 78 (S) |
| DISP-I6 | PRAYPHOS S5PP FG | 0.65 | 65 | 232 | 156 (S) |
| DISP-I7 | PRAYPHOS STMP 118 FG | 0.65 | 65 | 232 | 254 (S) |
| DISP-I8 | PRAYPHOS KTPP FG | 0.35 | 65 | 231 | 1883 (S) |
| DISP-I9 | Trisodium phosphate | 0.75 | 50 | 213 | 9.4(N) |
| DISP-I10 | Na₂HPO₃ | 0.5 | 50 | 202 | 6.2 (N) |
| DISP-C7 | Hostaphat KL 340D | 3.0 | 50 | 233 | 8.2 (S) |
| DISP-C8 | Rhodoline 3700 | 10 | 50 | 332 | 127 (S) |

| | | | | | |
|---|---|---|---|---|---|
| (N) = Newtonian viscosity behaviour (S) = Shear thinning behaviour | | | | | |

Dispersions having a viscosity higher than 100 mPa.s⁻¹ and a shear thinning behaviour are more prone to structuration and flocculation and thus can result in less stable inks. If in that case the particle size is larger than 250 nm, the dispersion is to be considered as not suitable for industrial application in white ink preparation.

### C.3.5. Preparation of white metal oxide dispersions with metal oxide particles having different zeta potentials.

A plastic bottle of 100 mL is filled with 50 wt.% of white metal oxide, 10 wt.% of EXA, 0.4 wt.% of Proxelk and 48.85% of deionized water. The bottle was further filled with 160 g of 3 mm yttrium stabilized zirconia beads. The bottle was placed on a roller bank, rolling for 7 days, after which the dispersion was separated from the beads via decantation. The properties of the obtained inventive dispersions are summarized in Table 4.

**Table 4: Zetapotential, particle size after ageing and viscosity increase after ageing of inventive white metal oxide dispersions.**

| Dispersion | Metal oxide | Zetapotential (mV) @ pH = 8 | Particle size after aging (nm) | Viscosity behaviour after ageing * |
|---|---|---|---|---|
| DISP-I1 | TS6200 | -25.0 | 213 | N |
| DISP-I111 | TS4657 | -20.0 | 207 | N |
| DISP-I12 | XRFDO | -0.5 | 243 | S |
| DISP-I13 | R2280 | 0.5 | 397 | S |

| | | | | |
|---|---|---|---|---|
| * : (N) = Newtonian viscosity behaviour; (S) = Shear thinning behaviour | | | | |

As can been seen from Table 4, pigments having a zeta potential value equal or less than -20 mV lead to dispersions showing a Newtonian viscosity behaviour and to smaller average particle sizes. These dispersions are more fit for use in inkjet inks.

### C4. White ink formulations

Inventive (I-INK) and comparative inks (C-INK) were formulated according to the compounds in Table 5, using white pigment dispersions prepared in § C.3. An ink formulation with DISP-C8 could not be obtained due to a too high viscosity increase of the dispersion after ageing. All values are in wt.% with respect to the total weight of the ink.

**Table 5: White ink compositions**

| Compound in wt.% | C-INK1 | I-INK1 | I-INK2 | I-INK3 | I-INK4 | C-INK2 | I-INK5 |
|---|---|---|---|---|---|---|---|
| DISP-C5 | 34.0 | - | - | - | - | - | - |
| DISP-I1 | - | 22.0 | - | - | - | - | - |
| DISP-I2 | - | - | 36.66 | - | - | - | - |
| DISP-I3 | - | - | - | 36.66 | - | - | - |
| DISP-I4 | - | - | - | - | 36.66 | - | - |
| DISP-C6 | - | - | - | - | - | 22.0 | - |
| DISP-I1 | - | - | - | - | - | - | 22.0 |
| HD | 3.0 | 3.0 | 3.0 | 3.0 | 3.0 | 3.0 | 3.0 |
| PG | 28.5 | 38.0 | 34.0 | 34.0 | 34.0 | 38.0 | 40.0 |
| Aquacer 530 | - | - | 3.13 | 3.13 | 3.13 | - | - |
| Surf 1 | 0.27 | 0.27 | - | - | - | - | - |
| Surf 2 | - | - | 0.4 | 0.4 | 0.4 | 0.4 | 0.4 |
| D.I. water | Up to 100% | Up to 100% | Up to 100% | Up to 100% | Up to 100% | Up to 100% | Up to 100% |

**Table 5 (continued)**

| Compound in wt.% | I-INK6 | I-INK7 | I-INK8 | C-INK3 |
|---|---|---|---|---|
| DISP-I1 | 36.66 | - | - | - |
| DISP-I9 | - | 34.0 | - | - |
| DISP-I10 | - | - | 22.0 | - |
| DISP-C7 | - | - | - | 36.66 |
| HD | 3.0 | 3.0 | 3.0 | 3.0 |
| PG | 34 | 38.0 | 38.0 | 38.0 |
| Aquacer 530 | 3.13 | 3.13 | 3.13 | 3.13 |
| Surf 2 | 0.4 | 0.4 | 0.4 | 0.4 |
| D.I. water | Up to 100% | Up to 100% | Up to 100% | Up to 100% |

The kinematic viscosity at 32°C was measured of all comparative and inventive ink formulations as described in § C.2.6. The measured values are listed in Table 6.

**Table 6: Viscosity values of white inks of Table 5**

| | Kinematic viscosity in mm²/s at 32°C |
|---|---|
| C-INK1 | 3.2 |
| C-INK2 | 4.6 |
| C-INK3 | 6.1 |
| I-INK1 | 3.2 |
| I-INK2 | 3.8 |
| I-INK3 | 3.7 |
| I-INK4 | 3.7 |
| I-INK5 | 3.6 |
| I-INK7 | 3.9 |
| I-INK8 | 3.3 |

### C.5. Example 1

Example 1 shows that inventive white ink formulations comprising a salt selected from the group consisting of a phosphate, polyphosphate and phosphite do not show caking upon standing with respect to comparative ink formulations comprising an anionic polymeric dispersant.

The caking upon standing of inventive white ink I-INK1 and comparative white ink C-INK1 were evaluated according to § C.2.5. It was observed that I-INK1 comprising a polyphosphate as dispersant, did not show caking upon standing after 14 days, while C-INK1 did show substantive caking.

### C.6. Example 2

Example 2 shows that inventive white ink formulations including a polyphosphate, a phosphate or a phosphite have an increased storage stability with respect to comparative ink formulations

The storage stability of inventive white inks I-INK2 to I-INK4 was measured according to § C.2.6. The results are summarised in Table 7.

**Table 7: Storage stability of white inks**

| | Viscosity increase after 7 days (%) | Viscosity increase after 14 days (%) |
|---|---|---|
| C-INK3 | 324.3 | 271.3 |
| I-INK2 | 6.3 | 2.1 |
| I-INK3 | 2.3 | 18.9 |
| I-INK4 | 52.1 | 94.9 |
| I-INK7 | 14.3 | 28.5 |
| I-INK8 | 12.9 | 19.7 |

From Table 7 it follows that the storage stability of white pigment inks comprising a salt selected from the group consisting of a phosphate, polyphosphate and phosphite is more constant with respect to a comparative white ink based on a phosphate containing polymer.

### D.7. Example 3

Example 3 shows that inventive white ink formulations show an improved latency (decap time) behaviour with respect to comparative ink formulations.

The latency of comparative ink C-INK-2 and inventive inks I-INK5 and I-INK6 was measured according to § C.2.7. The number of failing and side shooting are summarized in Table 8.

**Table 8: Decap time values of white inks.**

| | Sum of side shooting nozzles at 5, 10 & 20 min. of head idled time | Sum of failing nozzles at 5, 10 & 20 min. of head idled time |
|---|---|---|
| C-INK2 | 10 | 120 |
| I-INK5 | 0 | 2 |
| I-INK6 | 0 | 19 |

From Table 8, it follows that inventive white pigment inks comprising a polyphosphate dispersant show a much better latency which results in a much increased jetting reliability. Furthermore, the presence of a polyphosphate dispersant allows to have a higher pigment amount in the inkjet ink without leading to an unacceptable latency. A higher pigment amount result in an increased opacity of the white ink layer for a certain ink load.

## Claims

1. An aqueous white ink comprising a white metal oxide pigment having an average particle size from 100 nm to 1000 nm, in an amount from 5 to 50 wt.%, a salt selected from the group consisting of a phosphate, polyphosphate and phosphite, a water-miscible organic solvent, the ink having a kinematic viscosity from 1 to 25 mm²/s at 32°C.

2. The aqueous white ink according to Claim 1 wherein the amount of the salt selected from the group consisting of a phosphate, polyphosphate and phosphite is from 0.01 to 1 wt.% with respect to the total weight of the ink.

3. The aqueous white ink according to any of the preceding claims wherein the white metal oxide pigment is selected from the group consisting of titanium oxide (TiO₂), zinc oxide (ZnO) and zirconium dioxide (ZrO₂).

4. The aqueous white ink according to Claim 3 wherein the white metal oxide pigment comprises silica.

5. The aqueous white ink according to any of the preceding claims wherein the white metal oxide pigment has a zeta potential equal to or less than - 20 mV.

6. The aqueous white ink according to any of the preceding claims wherein the polyphosphate comprises at least 3 phosphate groups.

7. The aqueous white ink according to any of the preceding claims further containing a binder selected from the group consisting of a polyacrylate containing resin, a polyurethane containing resin, a carbodiimide containing resin and a wax.

8. An ink set for inkjet printing comprising an aqueous white ink as defined in claim 1 to Claim 7 and an aqueous pre-treatment liquid comprising a component capable of aggregating components of the aqueous inkjet ink.

9. The ink set for inkjet printing according to Claim 8 wherein the component is a multivalent metal salt, a cationic polymer or an organic acid.

10. A recording method including the steps of:
a) providing a substrate; and
b) jetting an aqueous white inkjet ink as defined in any of the preceding claims onto at least one surface of the substrate such as to form an image; and
b) drying the jetted inkjet ink by applying heat or an air flow to the image.

11. The recording method according to Claim 10 wherein, prior to step b) an aqueous pre-treatment liquid comprising a component capable of aggregating components of the aqueous inkjet ink as defined in claim 1 to Claim 7, is applied on at least one surface of the substrate; and optionally at least partially dry the pre-treatment liquid before step b).

12. The recording method according to Claim 11 wherein the aqueous pre-treatment liquid is applied by means of a jetting technique.

13. The recording method according to Claim 11 and Claim 12 wherein the jetting of the aqueous white ink is performed by means of a through-flow head.

## Patentansprüche

1. Eine wässrige weiße Tinte, enthaltend ein weißes Metalloxidpigment mit einer mittleren Partikelgröße zwischen 100 nm und 1.000 nm in einer Menge zwischen 5 Gew.-% und 50 Gew.-%, ein Salz, ausgewählt aus der Gruppe bestehend aus einem Phosphat, einem Polyphosphat und einem Phosphit, und ein wassermischbares organisches Lösungsmittel, wobei die Tinte eine kinematische Viskosität zwischen 1 und 25 mm²/s bei 32°C aufweist.

2. Die wässrige weiße Tinte nach Anspruch 1, wobei die Menge des Salzes, das aus der Gruppe bestehend aus einem Phosphat, einem Polyphosphat und einem Phosphit ausgewählt wird, zwischen 0,01 Gew.-% und 1 Gew.-%, bezogen auf das Gesamtgewicht der Tinte, liegt.

3. Die wässrige weiße Tinte nach einem der vorstehenden Ansprüche, wobei das weiße Metalloxidpigment aus der Gruppe bestehend aus Titanoxid (TiO₂), Zinkoxid (ZnO) und Zirconiumdioxid (ZrO₂) ausgewählt wird.

4. Die wässrige weiße Tinte nach Anspruch 3, wobei das weiße Metalloxidpigment Siliciumdioxid enthält.

5. Die wässrige weiße Tinte nach einem der vorstehenden Ansprüche, wobei das weiße Metalloxidpigment ein Zeta-Potential von höchstens -20 mV hat.

6. Die wässrige weiße Tinte nach einem der vorstehenden Ansprüche, wobei das Polyphosphat mindestens 3 Phosphatgruppen umfasst.

7. Die wässrige weiße Tinte nach einem der vorstehenden Ansprüche, die ferner ein Bindemittel, ausgewählt aus der Gruppe bestehend aus einem Harz enthaltenden Polyacrylat, einem Harz enthaltenden Polyurethan, einem Harz enthaltenden Carbodiimid und einem Wachs, enthält.

8. Ein Tintensatz für Tintenstrahldruck, der eine wie nach Anspruch 1 bis Anspruch 7 definierte wässrige weiße Tinte und eine wässrige Vorbehandlungsflüssigkeit, enthaltend eine Komponente, die zur Bildung von Aggregaten von Komponenten der wässrigen Tintenstrahltinte befähigt ist, enthält.

9. Der Tintensatz für Tintenstrahldruck nach Anspruch 8, wobei die Komponente ein multivalentes Metallsalz, ein kationisches Polymer oder eine organische Säure ist.

10. Ein Aufzeichnungsverfahren, das die folgenden Schritte umfasst:
a) Bereitstellen eine Substrats, und
b) Aufspritzen einer wie nach einem der vorstehenden Ansprüche definierten wässrigen weißen Tintenstrahltinte auf mindestens eine Oberfläche des Substrats, um ein Bild zu bilden, und
b) Trocknung der aufgespritzten Tintenstrahltinte durch Erwärmung oder mittels eines auf das Bild gerichteten Luftstroms.

11. Das Aufzeichnungsverfahren nach Anspruch 10, wobei vor Schritt b) eine wässrige Vorbehandlungsflüssigkeit, enthaltend eine Komponente, die zur Bildung von Aggregaten von Komponenten der wie in Anspruch 1 bis Anspruch 7 definierten wässrigen Tintenstrahltinte befähigt ist, auf mindestens eine Oberfläche des Substrats aufgetragen wird und die Vorbehandlungsflüssigkeit vor Schritt b) gegebenenfalls mindestens teilweise getrocknet wird.

12. Das Aufzeichnungsverfahren nach Anspruch 11, wobei die wässrige Vorbehandlungsflüssigkeit mittels einer Strahltechnik aufgetragen wird.

13. Das Aufzeichnungsverfahren nach Anspruch 11 und Anspruch 12, wobei das Aufspritzen der wässrigen weißen Tinte mittels eines Through-Flow-Kopfes (Druckkopfes mit Tintenumlauf) erfolgt.

## Revendications

1. Encre blanche aqueuse contenant un pigment d'oxyde métallique blanc ayant une taille de particule moyenne comprise entre 100 nm et 1.000 nm dans une quantité comprise entre 5% en poids et 50% en poids, un sel choisi parmi le groupe composé d'un phosphate, d'un polyphosphate et d'un phosphite et un solvant organique miscible à l'eau, ladite encre présentant une viscosité cinématique comprise entre 1 et 25 mm²/s à 32°C.

2. Encre blanche aqueuse selon la revendication 1, **caractérisée en ce que** la quantité du sel choisi parmi le groupe composé d'un phosphate, d'un polyphosphate et d'un phosphite est comprise entre 0,01% en poids et 1% en poids par rapport au poids total de l'encre.

3. Encre blanche aqueuse selon l'une quelconque des revendications précédentes, **caractérisée en ce que** le pigment d'oxyde métallique blanc est choisi parmi le groupe composé d'oxyde de titane (TiO₂), d'oxyde de zinc (ZnO) et de dioxyde de zirconium (ZrO₂).

4. Encre blanche aqueuse selon la revendication 3, **caractérisée en ce que** le pigment d'oxyde métallique blanc contient de la silice.

5. Encre blanche aqueuse selon l'une quelconque des revendications précédentes, **caractérisée en ce que** le pigment d'oxyde métallique blanc a un potentiel zêta maximal de -20 mV.

6. Encre blanche aqueuse selon l'une quelconque des revendications précédentes, **caractérisée en ce que** le polyphosphate comprend au moins 3 groupes phosphate.

7. Encre blanche aqueuse selon l'une quelconque des revendications précédentes contenant en outre un liant choisi parmi le groupe composé d'un polyacrylate contenant une résine, d'un polyuréthane contenant une résine, d'un carbodiimide contenant une résine et d'une cire.

8. Ensemble d'encres pour impression à jet d'encre comprenant une encre blanche aqueuse telle que définie selon la revendication 1 à la revendication 7 et un liquide de prétraitement aqueux contenant un composant capable de former des agrégats de composants de l'encre pour jet d'encre aqueuse.

9. Ensemble d'encres pour impression à jet d'encre selon la revendication 8, **caractérisé en ce que** le composant est un sel métallique multivalent, un polymère cationique ou un acide organique.

10. Procédé d'enregistrement comprenant les étapes consistant à:
a) mettre à disposition un substrat, et
b) projeter une encre pour jet d'encre blanche aqueuse telle que définie selon l'une quelconque des revendications précédentes sur au moins une superficie du substrat afin de former une image, et
b) sécher l'encre pour jet d'encre projetée en la chauffant ou en la soumettant à un flux d'air.

11. Procédé d'enregistrement selon la revendication 10, **caractérisé en ce qu'**avant l'étape b), un liquide de prétraitement aqueux contenant un composant capable de former des agrégats de composants de l'encre pour jet d'encre aqueuse telle que définie selon la revendication 1 à la revendication 7 est appliqué sur au moins une superficie du substrat et que le liquide de prétraitement est éventuellement séché au moins partiellement avant l'étape b).

12. Procédé d'enregistrement selon la revendication 11, **caractérisé en ce que** le liquide de prétraitement aqueux est appliqué au moyen d'une technique de jet.

13. Procédé d'enregistrement selon la revendication 11 et la revendication 12, **caractérisé en ce que** la projection de l'encre blanche aqueuse s'effectue au moyen d'une tête avec recirculation d'encre (tête de type *through-flow*).
